(19) Europäisches Patentamt
European Patent Office
Office européen des brevets

(11) **EP 3 989 421 A1**

(12) **EUROPEAN PATENT APPLICATION**
published in accordance with Art. 153(4) EPC

(43) Date of publication:
**27.04.2022 Bulletin 2022/17**

(21) Application number: **19933471.5**

(22) Date of filing: **18.06.2019**

(51) International Patent Classification (IPC):
*H02M 1/12* (2006.01)     *H02M 1/44* (2007.01)

(52) Cooperative Patent Classification (CPC):
**H02M 1/12; H02M 1/44**

(86) International application number:
**PCT/JP2019/024079**

(87) International publication number:
**WO 2020/255247 (24.12.2020 Gazette 2020/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventors:
• **KAMIKURA, Mamoru**
**Tokyo 100-8310 (JP)**
• **NAGASAWA, Shinobu**
**Tokyo 100-8310 (JP)**

(74) Representative: **Witte, Weller & Partner**
**Patentanwälte mbB**
**Postfach 10 54 62**
**70047 Stuttgart (DE)**

(54) **LEAKAGE CURRENT REDUCTION DEVICE**

(57)     A leakage current reduction device includes a voltage detection unit including an inductor and configured to detect a voltage caused by a leakage current, a compensation voltage generation unit configured to generate a compensation voltage from the voltage detected by the voltage detection unit, and a compensation voltage application unit including an inductor and configured to apply the compensation voltage generated by the compensation voltage generation unit. The leakage current reduction device is connected between a system power supply and a load device. The inductor in the voltage detection unit includes a main winding and an auxiliary winding, the main winding is connected to a wire for the system power supply and the load device, and the auxiliary winding is magnetically coupled to the main winding and connected to input of the compensation voltage generation unit. The compensation voltage generation unit is configured to generate the compensation voltage depending on a voltage caused by the auxiliary winding. The compensation voltage application unit is configured to cause an application voltage for reducing the leakage current to be produced in the wire, and the application voltage is produced depending on the compensation voltage generated by the compensation voltage generation unit. An impedance of the inductor in the compensation voltage application unit is lower than an impedance of the inductor in the voltage detection unit.

FIG. 1

**Description**

Technical Field

The present disclosure relates to a leakage current reduction device for reducing a leakage current caused by a switching operation of a semiconductor element in a power conversion device, for example, an inverter device, that is configured to convert direct-current power into alternate-current power or alternate-current power into direct-current power.

Background Art

Power conversion devices typically produce electrical noise, and if sufficient measures are not taken, various problems may arise. In particular, for a power conversion device operated by an alternate-current power supply, a plurality of devices are often connected through a common power supply line, and the device may suffer malfunctions caused by noise occurring in another power conversion device or on the contrary, noise occurring in the device may cause malfunctions to another device.

Examples of the source of the noise may include semiconductor electrical switching in an inverter or other element and minute discharging in various motors. As example measures against the noise, weakening a generated energy in the source of the noise and reducing transmission on the propagation route of the noise are performed.

The propagating noise can be classified into two types on the basis of how it propagates. A first type is normal-mode noise occurring between signal lines and between power supply lines and being a noise component occurring between power supply paths and flowing in the same direction as the direction in which a current of the power supply or a signal flows. Because the normal-mode noise propagates between the power supply paths, the propagation route is clear, and measures against the noise can be relatively easy. The measures against the normal-mode noise can be taken by the use of a filter including a coil and a capacitor in the signal line or power supply line. A second type is common-mode noise occurring between a signal line or a power supply line and ground and is also called a leakage current. That noise flows in the same direction through the signal line or power supply line and the ground, propagates through a metal casing, and passes through a stray capacitance or other area, and returns to the noise source. In this type, the propagation route is unclear, and measures against the noise are difficult. As the measures against the common-mode noise, like those against the normal-mode noise, a filter including a coil and a capacitor for the common mode is used in the signal line or the power supply line.

As an example of the measures against the common-mode noise, a method for reducing a leakage current by means of a compensation voltage generation unit that uses a coil for detecting a voltage caused by the leakage current, a coil for applying the compensation voltage, and an active element is disclosed (see, for example, Non Patent Literature 1).

Citation List

Non Patent Literature

Non Patent Literature 1: J. Biela et al., "Passive and active hybrid integrated EMI filters," IEEE-Trans. Power Electronics, vol. 24, no. 5, 2009, pp. 1340-1349

Summary of Invention

Technical Problem

In the case where it is desired to reduce a high-frequency leakage current in a frequency band of, for example, 150 [kHz] to 1 [MHz] to an inductor for application of a compensation voltage, when an impedance connected to a unit for generating a compensation voltage is lower than an impedance connected to a main winding in an inductor, the attenuation performance of the inductor in a unit for applying the compensation voltage as a passive element degrades. Therefore, there is a problem in that the amount of attenuation of the high-frequency current decreases.

The present disclosure has been made in view of the above circumstances, and it is an object of the present disclosure to provide a leakage current reduction device that is configured such that an attenuation performance of an inductor in a compensation voltage application unit as a passive element is unlikely to decrease even if an impedance connected to a compensation voltage generation unit is lower than an impedance connected to a main winding in the inductor.

Solution to Problem

A leakage current reduction device according to an embodiment of the present disclosure includes a voltage detection unit including an inductor and configured to detect a voltage caused by a leakage current, a compensation voltage generation unit configured to generate a compensation voltage from the voltage detected by the voltage detection unit, and a compensation voltage application unit including an inductor and configured to apply the compensation voltage generated by the compensation voltage generation unit. The leakage current reduction device is connected between a system power supply and a load device. The inductor in the voltage detection unit includes a main winding and an auxiliary winding, the main winding is connected to a wire for the system power supply and the load device, and the auxiliary winding is magnetically coupled to the main winding and connected to input of the compensation voltage generation unit. The compensation voltage generation unit is configured to generate the compensation voltage depending on a voltage caused by the auxiliary winding. The compensation voltage application unit is configured to cause an application voltage for reducing the leakage current to be produced in the wire, and the application voltage is produced depending on the compensation voltage generated by the compensation voltage generation unit. An impedance of the inductor in the compensation voltage application unit is lower than an impedance of the inductor in the voltage detection unit.

Advantageous Effects of Invention

According to an embodiment of the present disclosure, the leakage current reduction device is provided such that attenuation performance of the inductor in the compensation voltage application unit as the passive element is unlikely to degrade even if the impedance connected to the compensation voltage generation unit is lower than the impedance connected to the main winding of the inductor because the impedance of the inductor in the compensation voltage application unit is lower than the impedance of the inductor in the voltage detection unit.

Brief Description of Drawings

[Fig. 1] Fig. 1 illustrates the configuration of a power conversion device including a high-frequency leakage current reduction device according to Embodiment 1.
[Fig. 2] Fig. 2 illustrates an inductor in each of a voltage detection unit and a compensation voltage application unit according to Embodiment 1.
[Fig. 3] Fig. 3 is an illustration for describing a location where an impedance for a high-frequency leakage current seen from a main winding in the inductor in the compensation voltage application unit to a load device 5 is measured according to Embodiment 1.
[Fig. 4] Fig. 4 illustrates an impedance connected to the main winding in the inductor in the compensation voltage application unit and an impedance connected to a main winding in a compensation voltage generation unit according to Embodiment 1.
[Fig. 5] Fig. 5 is an illustration for describing the impedance seen from the main winding to an auxiliary winding according to Embodiment 1.
[Fig. 6] Fig. 6 illustrates frequency characteristics of the impedance seen from the main winding to the auxiliary winding when the winding ratio ($N_2/N_1$) between the winding number ($N_1$) of the main winding and the winding number ($N_2$) of the auxiliary winding is changed according to Embodiment 1.
[Fig. 7] Fig. 7 illustrates conductive high-frequency leakage currents when the voltage detection unit and the compensation voltage application unit have the same impedance in related art.
[Fig. 8] Fig. 8 illustrates high-frequency leakage currents when the impedance of the compensation voltage application unit is one quarter of the impedance of the voltage detection unit 1 according to Embodiment 1.
[Fig. 9] Fig. 9 illustrates an inductor using a cut-type magnetic body and being of a substrate mount type according to Embodiment 2.
[Fig. 10] Fig. 10 illustrates a through-type magnetic body according to Embodiment 3.
[Fig. 11] Fig. 11 illustrates the configuration of a power conversion device including a high-frequency leakage current reduction device when a system power supply is a three-phase four-wire power supply according to Embodiment 4. Description of Embodiments

A high-frequency leakage current reduction device according to Embodiments is described below with reference to the drawings. In the drawings, the same reference signs are used in the same components, and redundant description is provided only when required.

In Embodiments, high-frequency leakage currents in the frequency band of 150 [kHz] to 1 [MHz] are discussed, but are not restrictive. The high-frequency leakage current reduction device according to Embodiments are also applicable to a leakage current reduction device.

Embodiment 1

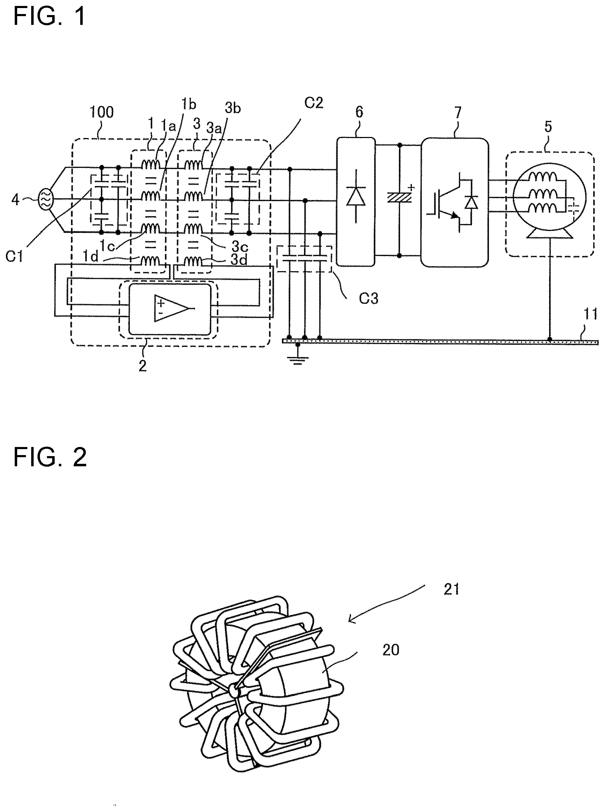

Fig. 1 illustrates the configuration of a power conversion device including a high-frequency leakage current reduction device 100 according to Embodiment 1.

The high-frequency leakage current reduction device 100 is connected between a three-phase three-wire system power supply 4 and a rectifier 6. The high-frequency leakage current reduction device 100 includes a capacitor group C1, a voltage detection unit 1 connected to wires for the respective phases of the system power supply 4, a compensation voltage application unit 3 connected to the voltage detection unit 1, a capacitor group C2, and a compensation voltage generation unit 2 that uses an active element for detecting a voltage caused by a high-frequency leakage current.

The capacitor group C1 includes a plurality of capacitors connected between the wires for the respective phases of the three-phase three-wire system power supply 4.

The capacitor group C2 includes a plurality of capacitors connected to the compensation voltage application unit 3 and connected between the wires for the respective phases of the system power supply 4.

The voltage detection unit 1 includes a plurality of main windings 1a to 1c for the respective phases and each having a first end connected to the wire for the system power supply 4 and a second end connected to the wire for the compensation voltage application unit 3 and an auxiliary winding 1d magnetically coupled to the main windings 1a to 1c.

The compensation voltage application unit 3 includes a plurality of main windings 3a to 3c for the respective phases and having first ends connected to the wires for the second ends of the main windings 1a to 1c and second ends connected to the wires for the rectifier 6 and an auxiliary winding 3d magnetically coupled to the main windings 3a to 3c.

In Embodiment 1, the impedance of each of the main windings 3a to 3c in the compensation voltage application unit 3 is lower than the impedance of the corresponding one of the main windings 1a to 1c in the voltage detection unit 1.

The compensation voltage generation unit 2 includes the active element and generates a compensation voltage from a voltage detected by the voltage detection unit 1 by using this active element. Specifically, a voltage caused by the auxiliary winding 1d is input into the input of the compensation voltage generation unit 2. The output of the compensation voltage generation unit 2 is connected to the auxiliary winding 3d. The compensation voltage generated by the compensation voltage generation unit 2 is applied to the auxiliary winding 3d. Thus, an induced voltage is produced in the main windings 3a to 3c magnetically coupled to the auxiliary winding 3d, and the compensation voltage for reducing the high-frequency leakage current is applied to the wire for each phase of the system power supply 4.

A capacitor group C3 is connected between the high-frequency leakage current reduction device 100 and the rectifier 6. The capacitor group C3 is connected such that the capacitor group C3 includes a plurality of capacitors having first ends connected between the wires for the respective phases and second ends connected to a casing 11 of a load device 5. The capacitors in the capacitor group C3 are grounded with the casing 11 disposed between the capacitors and the ground.

The rectifier 6 is connected to the wire for the output for each phase of the compensation voltage application unit 3. The rectifier 6 rectifies a current flowing through the wire for the output for each phase of the compensation voltage application unit 3.

An inverter 7 is connected to the output side of the rectifier 6 and converts three-phase direct-current power rectified by the rectifier 6 into three-phase alternate-current power.

The load device 5 receives the alternate-current power converted by the inverter 7. The load device 5 is grounded by the casing 11 of the load device 5.

Fig. 2 illustrates an inductor in each of the voltage detection unit 1 and the compensation voltage application unit 3 according to Embodiment 1.

The inductor in each of the voltage detection unit 1 and the compensation voltage application unit 3 according to Embodiment 1 is an inductor 21 using a toroidal magnetic body 20, as illustrated in Fig. 2, and being of a substrate mount type.

In Embodiment 1, in the inductor in the voltage detection unit 1, that is, of the wires connected to the main windings 1a to 1c and the auxiliary winding 1d, a ground pattern of the wire for connection to the system power supply 4 is also used as a ground pattern of the wire for being connected to the load device 5. The ground pattern of the wire for connection to the system power supply 4 and the ground pattern of the wire for being connected to the load device 5 may be different.

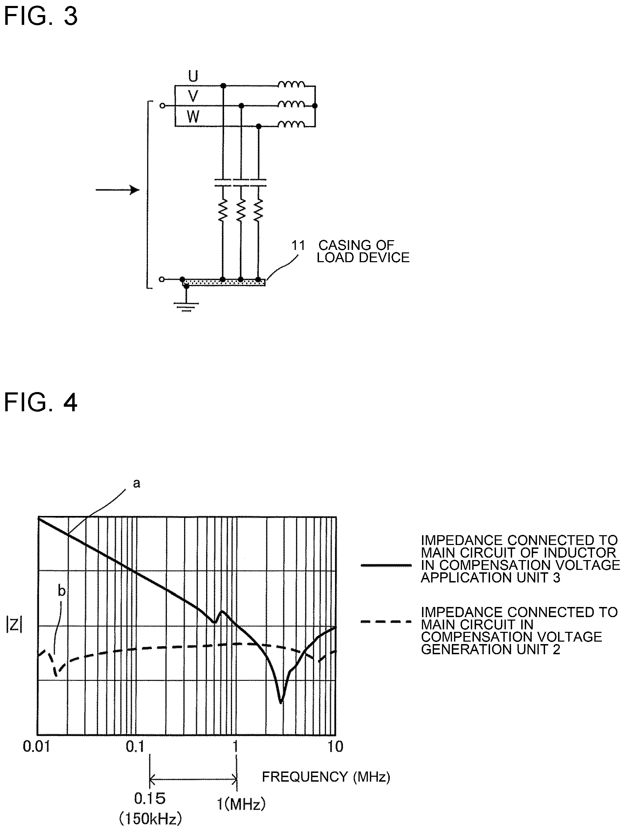

Fig. 3 is an illustration for describing a location where the impedance for the high-frequency leakage current seen from the main windings 3a to 3c in the inductor in the compensation voltage application unit 3 to the load device 5 is measured according to Embodiment 1. The impedance seen from the main windings 3a to 3c in the inductor in the compensation voltage application unit 3 to the load device 5, as illustrated in Fig. 3, is discussed.

Fig. 4 illustrates an impedance connected to the main windings 3a to 3c in the inductor in the compensation voltage application unit 3 and an impedance connected to the main windings 3a to 3c in the compensation voltage generation unit 2 according to Embodiment 1.

The measured impedance connected to the main windings 3a to 3c in the inductor in the compensation voltage application unit 3 is shown by the solid line a in Fig. 4.

An output impedance Zout of the compensation voltage generation unit 2 using the active element is expressed by Equation (1).

[Math. 1]

$$Z_{out} = \frac{Z_o}{1 + \beta * A_{OL}}$$

Equation (1)

Here, Zo is the open-loop output impedance, $\beta$ is the feedback coefficient, and $A_{OL}$ is the open-loop gain. The impedance connected to the main windings 3a to 3c in the inductor in the compensation voltage generation unit 2 using the active element is shown by the dashed line b in Fig. 4.

As illustrated in Fig. 4, for the inductor in the compensation voltage application unit 3, in a frequency band of about 150 [kHz] to about 1 [MHz], the impedance connected to the compensation voltage generation unit 2 is lower than the impedance connected to the main windings 3a to 3c in the inductor whose high-frequency leakage current is to be reduced.

A typical stray capacitance of a motor for a compressor, which is a load device in an air conditioner, is on the order of 0.2 [nF] to 20 [nF], and thus the impedance at 150 [kHz] is 53 [Ω] to 5305 [Ω]. When a typical gain is 20 [dB] and a typical open loop output impedance is 100 [Ω], the output impedance Zout of the compensation voltage generation unit 2 using the active element is 1 [Ω], and it can be confirmed that in general, the impedance connected to the main windings 3a to 3c in the inductor in the compensation voltage generation unit 2 is lower than the impedance connected to the main windings 3a to 3c in the inductor in the compensation voltage application unit 3.

The winding ratio between the main windings 3a to 3c and the auxiliary winding 3d in the inductor in the compensation voltage application unit 3 may be 1:1 or may be 1:2 or more. When the winding ratio between the main windings 3a to 3c and the auxiliary winding 3d is 2 or more:1, the advantageous effect of preventing the degradation in the attenuation performance of the inductor in the compensation voltage application unit 3 according to Embodiment 1 may be unsatisfactory for reasons described below.

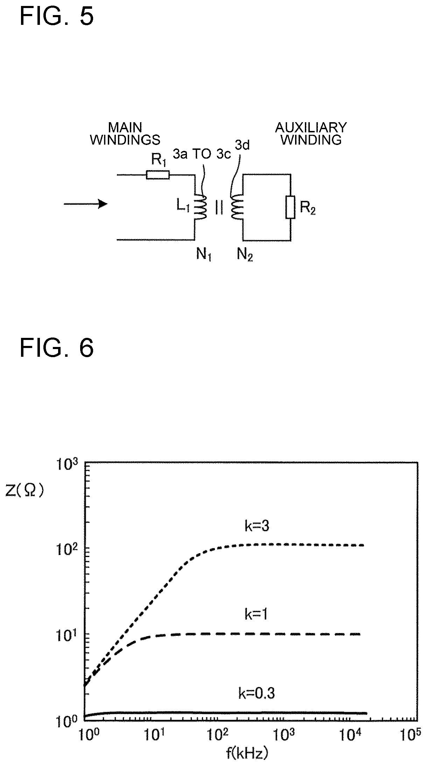

Fig. 5 is an illustration for describing the impedance seen from the main windings 3a to 3c to the auxiliary winding 3d according to Embodiment 1. When the degree of coupling between the main windings 3a to 3c and the auxiliary winding 3d is one and resistors $R_1$ and $R_2$ and an inductor $L_1$ are connected as illustrated in Fig. 5, the impedance seen from the main windings 3a to 3c to the auxiliary winding 3d is expressed by Equation (2).

[Math. 2]

$$Z = \sqrt{\frac{(R_1^2 + \omega^2 L_1^2)R_2^2 + 2\omega^2 L_1^2\, k^2 R_1 R_2 + \omega^2 L_1^2\, k^4 R_1^2}{R_2^2 + \omega^2\, k^4 L_1^2}}$$

Equation (2)

Fig. 6 illustrates frequency characteristics of the impedance seen from the main windings 3a to 3c to the auxiliary winding 3d when the winding ratio ($N_2/N_1$) between the winding number ($N_1$) of the main windings 3a to 3c and the winding number ($N_2$) of the auxiliary winding 3d is changed according to Embodiment 1.

Here, $\omega$ is the angular frequency, and k is the winding ratio (= $N_2/N_1$). When the winding number of the main windings 3a to 3c is larger than the winding number of the auxiliary winding 3d, as illustrated in Fig. 6, Z in Equation (2) is large.

That is, because the impedance of the inductor in the compensation voltage application unit 3 connected to the compensation voltage generation unit 2 is increased, the attenuation performance of the inductor in the compensation voltage application unit 3 as the passive element is unlikely to degrade. Thus, the attenuation performance of the inductor in the compensation voltage application unit 3 as the passive element is unlikely to degrade. However, because the main windings 3a to 3c transmit a higher current than the current flowing in the auxiliary winding 3d, the main windings 3a to 3c are thick, and this leads to an increased size and an increased cost of the inductor in the compensation voltage application unit 3.

In the current reduction device according to Embodiment 1, because the impedance of the compensation voltage application unit 3 is lower than the impedance of the voltage detection unit 1, even if the impedance connected to the compensation voltage generation unit 2 is lower than the impedance connected to the main windings 3a to 3c in the inductor, the attenuation performance of the inductor in the compensation voltage application unit 3 as the passive element is unlikely to degrade.

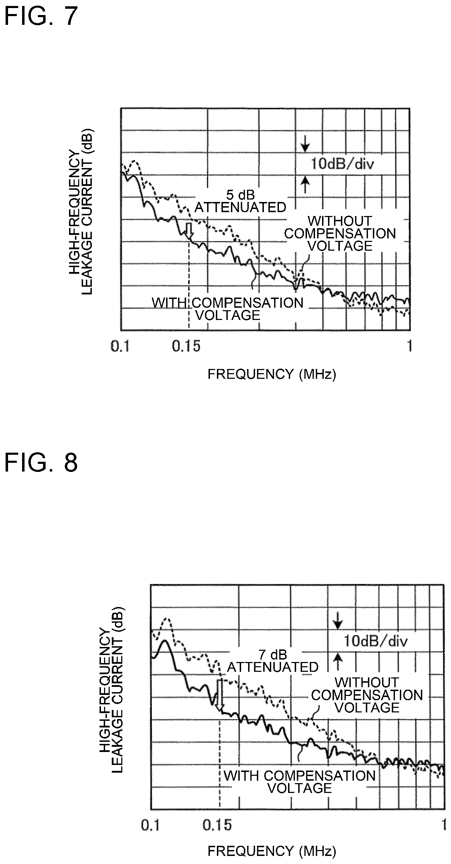

Fig. 7 illustrates conductive high-frequency leakage currents when the voltage detection unit 1 and the compensation voltage application unit 3 have the same impedance in related art. Fig. 8 illustrates high-frequency leakage currents when the impedance of the compensation voltage application unit 3 is one quarter of the impedance of the voltage detection unit 1 according to Embodiment 1. In Figs. 7 and 8, the solid line indicates the case where the compensation voltage is present, and the dashed line indicates the case where the compensation voltage is absent.

As illustrated in Fig. 7, in the case where the voltage detection unit 1 and the compensation voltage application unit 3 have the same impedance, even when the compensation voltage is applied, the attenuation is only 5 [dB]. As illustrated in Fig. 8, in the case where the impedance of the compensation voltage application unit 3 is one quarter of the impedance of the voltage detection unit 1, the attenuation is 7 [dB]. That is, it is revealed that although the impedance of the compensation voltage application unit 3 is lower, the advantageous effect of the attenuation is higher.

The lower limit of the impedance of the compensation voltage application unit 3 is defined by the voltage produced in the compensation voltage application unit 3 and the change over time in the current caused to flow in the compensation voltage generation unit 2, as expressed in Equation (3).

[Math. 3]

$$V = L \cdot \frac{dI}{dt}$$

Equation (3)

Because a typical voltage produced in the compensation voltage application unit 3 is 5 [V] and a change over time in the current caused to flow in the compensation voltage generation unit 2 under no load condition (maximum) is 1 [A/$\mu$s], 5 [$\mu$H] or more is needed as the impedance of the inductor in the compensation voltage application unit 3 at minimum.

Therefore, because the impedance of the inductor in the compensation voltage application unit 3 can be low, the cost of the inductor in the compensation voltage application unit 3 can be reduced. In Embodiment 1, because the system power supply 4 is a three-phase three-wire power supply, as compared with a three-phase four-wire power supply, the size of the inductor is unlikely to increase. When wire for high currents of about 35 [Arms] or more is used, because the wire diameter is about 3 mm, the advantageous effect of decreasing the impedance of the inductor in the compensation voltage application unit 3 is more noticeable.

In Embodiment 1, the toroidal coil is used. In comparison with a cut-type inductor and an inductor using a through-type magnetic body and being of a substrate non-mount type, a smaller inductor can be achieved. As described above, when the inductor using wire for high currents of about 35 [Arms] or more is used, the advantageous effect of decreasing the impedance of the inductor in the compensation voltage application unit 3 according to Embodiment 1 is more noticeable.

Embodiment 2

Next, Embodiment 2 is described. In Embodiment 1, the case where the inductor in each of the voltage detection unit 1 and the compensation voltage application unit 3 is the toroidal inductor illustrated in Fig. 2 is described. In Embodiment 2, a cut-type inductor is used as the inductor in each of the voltage detection unit 1 and the compensation voltage application unit 3.

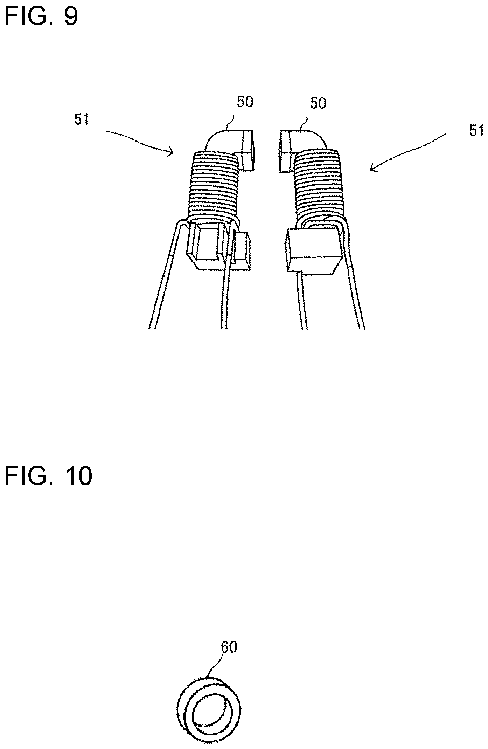

Fig. 9 illustrates an inductor 51 using a cut-type magnetic body 50 and being of a substrate mount type according to Embodiment 2.

The inductor 51 using the cut-type magnetic body 50 has a lower impedance, but is more inexpensive because of easiness of coiling the winding, as compared with the toroidal inductor of the same size.

Embodiment 3

Next, Embodiment 3 is described. In Embodiment 1, the case where the inductor in each of the voltage detection unit 1 and the compensation voltage application unit 3 is the toroidal inductor illustrated in Fig. 2 is described. In Embodiment 3, an inductor using a through-type magnetic body and being of a substrate non-mount type may be used.

Fig. 10 illustrates a through-type magnetic body 60 in Embodiment 3.

As compared with the toroidal inductor, the inductor using the through-type magnetic body 60 and being of a substrate non-mount type is generally more inexpensive because the winding number is small and the size of the magnetic body is small.

Embodiment 4

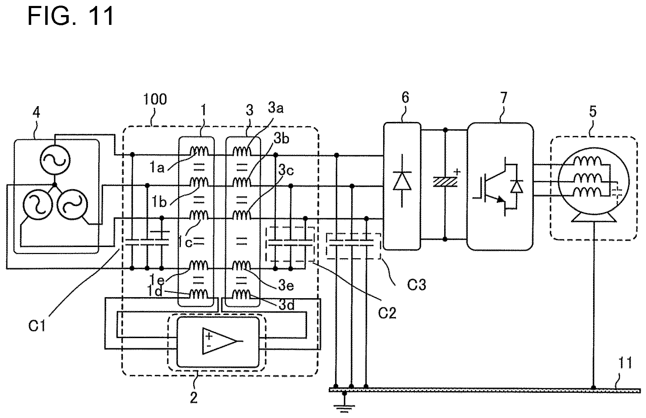

Next, Embodiment 4 is described. In Embodiment 1, the case where the system power supply 4 is a three-phase three-wire power supply is described. The system power supply 4 may be a three-phase four-wire power supply. Fig. 11 illustrates the configuration of a power conversion device including the high-frequency leakage current reduction device 100 when the system power supply 4 is a three-phase four-wire power supply according to Embodiment 4.

As illustrated in Fig. 11, in the high-frequency leakage current reduction device 100 according to Embodiment 4, unlike the high-frequency leakage current reduction device 100 according to Embodiment 1, a main winding 1e in the voltage detection unit 1 and a main winding 3e in the compensation voltage application unit 3 are connected in series at a neutral point of the system power supply 4.

As illustrated in Fig. 11, in comparison with the case where the system power supply 4 is a three-phase three-wire power supply, the increased number of the windings in the three-phase four-wire power supply leads to an increase in the size of the inductor. Thus, the advantageous effect of decreasing the impedance of the inductor in the compensation voltage application unit 3 is more noticeable.

In the above description, the case where the high-frequency leakage current reduction device 100 is connected between the system power supply 4 and the rectifier 6 is described. When the high-frequency leakage current reduction device 100 is disposed between the rectifier 6 and the inverter 7 or between the inverter 7 and the load device 5, substantially the same advantageous effect is also obtainable.

Embodiments are illustrative and are not intended to limit their scope to Embodiments. Embodiments can be implemented in other various forms, and various omissions, replacements, and changes can be made within the range that does not depart from the spirit of Embodiments. These embodiments and their modifications are included in the scope and spirit of Embodiments.

Reference Signs List

1: voltage detection unit, 1a to 1c: main winding, 1d: auxiliary winding, 1e: main winding, 2: compensation voltage generation unit, 3e: main winding, 3: compensation voltage application unit, 3a to 3c: main winding, 3d: auxiliary winding, 4: system power supply, 5: load device, 6: rectifier, 7: inverter, 11: casing, 20: toroidal magnetic body, 21: inductor using toroidal magnetic body, 50: cut-type magnetic body, 51: inductor using cut-type magnetic body, 60: through-type magnetic body, 100: high-frequency leakage current reduction device, C1 to C3: capacitor group

**Claims**

1.    A leakage current reduction device comprising:

    a voltage detection unit including an inductor and configured to detect a voltage caused by a leakage current;
    a compensation voltage generation unit configured to generate a compensation voltage from the voltage detected by the voltage detection unit; and
    a compensation voltage application unit including an inductor and configured to apply the compensation voltage generated by the compensation voltage generation unit,
    the leakage current reduction device being connected between a system power supply and a load device,
    the inductor in the voltage detection unit including a main winding and an auxiliary winding, the main winding connected to a wire for the system power supply and the load device, the auxiliary winding magnetically coupled to the main winding and connected to input of the compensation voltage generation unit,
    the compensation voltage generation unit being configured to generate the compensation voltage depending on a voltage caused by the auxiliary winding,
    the compensation voltage application unit being configured to cause an application voltage for reducing the leakage current to be produced in the wire depending on the compensation voltage generated by the compensation voltage generation unit,
    an impedance of the inductor in the compensation voltage application unit being lower than an impedance of the inductor in the voltage detection unit.

2.    The leakage current reduction device of claim 1, wherein the impedance of the inductor in the compensation voltage application unit is higher than or equal to 5 [μH].

3. The leakage current reduction device of claim 1 or claim 2, wherein the inductor in the compensation voltage application unit includes a main winding and an auxiliary winding, the main winding having a first end connected to the main winding in the voltage detection unit and a second end connected to the wire, the auxiliary winding magnetically coupled to the main winding in the compensation voltage application unit and connected to output of the compensation voltage generation unit, and
a winding number of the auxiliary winding in the compensation voltage application unit is smaller than a winding number of the main winding in the compensation voltage application unit.

4. The leakage current reduction device of any one of claim 1 to claim 3, wherein, in the wire connected to the inductor in the voltage detection unit and the inductor in the compensation voltage application unit, a ground pattern of a wire for being connected to the system power supply and a ground pattern of a wire for being connected to the load device are different.

5. The leakage current reduction device of any one of claim 1 to claim 4, wherein the inductor in the voltage detection unit or the inductor in the compensation voltage application unit is a coil using a toroidal magnetic body and being of a substrate mount type.

6. The leakage current reduction device of any one of claim 1 to claim 4, wherein the inductor in the voltage detection unit or the inductor in the compensation voltage application unit is a coil using a cut-type magnetic body and being of a substrate mount type.

7. The leakage current reduction device of any one of claim 1 to claim 4, wherein the inductor in the voltage detection unit or the inductor in the compensation voltage application unit is a coil using a through-type magnetic body and being of a substrate non-mount type.

8. The leakage current reduction device of any one of claim 1 to claim 7, wherein the inductor in the voltage detection unit or the inductor in the compensation voltage application unit is connected between the system power supply and a rectifier in a power conversion device.

9. The leakage current reduction device of any one of claim 1 to claim 8, wherein the system power supply is a three-phase three-wire system power supply, and
the inductor in the voltage detection unit or the inductor in the compensation voltage application unit is connected to the three-phase three-wire system.

10. The leakage current reduction device of any one of claim 1 to claim 8, wherein the system power supply is a three-phase four-wire system power supply, and
the inductor in the voltage detection unit or the inductor in the compensation voltage application unit is connected to the three-phase four-wire system.

11. The leakage current reduction device of any one of claim 1 to claim 10, wherein the leakage current is in a frequency band of 150 [kHz] to 1 [MHz].

FIG. 1

FIG. 2

FIG. 3

11 CASING OF
LOAD DEVICE

FIG. 4

IMPEDANCE CONNECTED TO
MAIN CIRCUIT OF INDUCTOR
IN COMPENSATION VOLTAGE
APPLICATION UNIT 3

IMPEDANCE CONNECTED TO
MAIN CIRCUIT IN
COMPENSATION VOLTAGE
GENERATION UNIT 2

|Z|

0.01          0.1          1          10

FREQUENCY (MHz)

0.15          1(MHz)
(150kHz)

# FIG. 5

# FIG. 6

FIG. 7

FIG. 8

FIG. 9

FIG. 10

FIG. 11

## INTERNATIONAL SEARCH REPORT

| International application No. |
|---|
| PCT/JP2019/024079 |

**A. CLASSIFICATION OF SUBJECT MATTER**
Int. Cl. H02M1/12(2006.01)i, H02M1/44(2007.01)i

According to International Patent Classification (IPC) or to both national classification and IPC

**B. FIELDS SEARCHED**

Minimum documentation searched (classification system followed by classification symbols)
Int. Cl. H02M1/12, H02M1/44

Documentation searched other than minimum documentation to the extent that such documents are included in the fields searched
Published examined utility model applications of Japan       1922-1996
Published unexamined utility model applications of Japan     1971-2019
Registered utility model specifications of Japan             1996-2019
Published registered utility model applications of Japan     1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-511287 A (MITSUBISHI ELECTRIC R&D CT EUROPE BV) 19 April 2018, & US 2018/0123543 A1 & WO 2016/208762 A1 & EP 3109987 A1 & CN 107810594 A | 1-11 |
| A | WO 2010/100934 A1 (MITSUBISHI ELECTRIC CORP.) 10 September 2010, & US 2011/0317455 A1 & CN 102342010 A | 1-11 |
| A | JP 2018-191443 A (SAMSUNG ELECTRONICS CO., LTD.) 29 November 2018 (Family: none) | 1-17 |
| A | JP 2008-530964 A (SCHAFFNER EMV AG) 07 August 2008, & US 2008/0143432 A1 & WO 2006/084504 A1 | 1-11 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16.07.2019 | 23.07.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/024079 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2003-87973 A (TOSHIBA CORP.) 20 March 2003 (Family: none) | 1-17 |
| A | JP 2004-357447 A (MEIDENSHA CORP.) 16 December 2004 (Family: none) | 1-1 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. BIELA et al.** Passive and active hybrid integrated EMI filters. *IEEE-Trans. Power Electronics,* 2009, vol. 24 (5), 1340-1349